# EUROPÄISCHE PATENTSCHRIFT

(11) **EP 2 457 874 B1**
(45) Veröffentlichungstag und Bekanntmachung des Hinweises auf die Patenterteilung: **18.09.2013**
(21) Anmeldenummer: 11187913.6
(22) Anmeldetag: 04.11.2011
(51) Int. Cl.: C02F 1/24, C02F 1/34, B03D 1/24, B03D 1/14

(54) **Druckentspannungsflotation**
Pressure relief flotation
Flottasion par relaxation de pression

(30) Priorität: 24.11.2010 DE 102010052191
(43) Veröffentlichungstag der Anmeldung: 30.05.2012
(73) Patentinhaber: Enviro-Chemie GmbH, 64380 Rossdorf (DE)
(72) Erfinder: Steinsdorfer, Robin, 76646 Bruchsal (DE); Hupfer, Gottlieb, 64846 Groß-Zimmern (DE)
(74) Vertreter: Köllner, Malte

(56) Entgegenhaltungen:
- DE-A1- 3 733 583
- US-A- 5 630 915
- US-A1- 2004 173 541
- US-B1- 7 336 019

## Beschreibung

### Gebiet der Erfindung

Die Erfindung betrifft Anlagen und Verfahren zur Druckentspannungsflotation.

Die Druckentspannungsflotation bzw. Entspannungsflotation dient dazu, Abwasser von dispergierten Stoffen, insbesondere von suspendierten Feststoffen, zu trennen. Hierbei macht man sich die Tatsache zunutze, dass die Löslichkeit eines gasförmigen Stoffs in einer Flüssigkeit bei konstanter Temperatur proportional mit dem Partialdruck dieses gasförmigen Stoffs über der Flüssigkeit ansteigt, bekannt als das Gesetz von Henry-Dalton.

Injiziert man demnach Luft in Wasser und beaufschlagt das entstehende Wasser-Luft-Gemisch mit einem Druck, dem sogenannten Sättigungsdruck, löst sich injizierte Luft in dem Wasser. Durch anschließende Minderung des Drucks sinkt die Löslichkeit des Wassers für Luft, sodass in dem Wasser gelöste Luft in Form feiner Blasen ausgast.

Durch Haftungsvorgänge der Blasen an den dispergierten Stoffen, etwa aufgrund von Oberflächenspannung oder infolge elektrostatischer Bindungen der Blasen an die dispergierten Stoffe und/oder durch Einfangen und Einbau von Gasblasen in das Gefüge von Flockenverbänden d. h. Agglomeraten von Feststoffen, schwimmen die dispergierten Stoffe auf.

### Stand der Technik

Das Verfahren der Druckentspannungsflotation sowie entsprechende Anlagen, Entspannungsflotationsanlagen genannt, sind dem Fachmann geläufig. So enthält etwa das VDMA-Einheitsblatt "VDMA 24430" Hinweise für die Planung, Projektierung und Ausführung von Entspannungsflotationsanlagen.

Aus dem VDMA-Einheitsblatt "VDMA 24430" ist unter anderem bekannt, dass die Leistung einer Entspannungsflotationsanlage von dem effektiven Luft-/Feststoffverhältnis und der Blasengröße abhängt. Positiv wirken sich ein hohes Luft-/Feststoffverhältnis und eine geringe Blasengröße aus.

Eine naheliegende Lösung zur Verbesserung der Leistung einer Entspannungsflotationsanlage wäre demnach eine Erhöhung des Sättigungsdrucks. Der Sättigungsdruck kann allerdings nur bis zu einem bestimmten Schwellwert vergrößert werden. Dieser ist durch die konstruktiven Gegebenheiten einer Entspannungsflotationsanlage vorgegeben. Eine darüber hinausgehende Erhöhung des Sättigungsdrucks ist nicht möglich.

Häufig müssen Chemikalien als Fällungs- und Flockungsmittel zugegeben werden, um zu gewährleisten, dass Gasblasen an den dispergierten Stoffen anhaften können.

Aus den Druckschriften WO 2005/074365 A2, US 5,219,401, US 6,413,216 und US 5,827,204 ist bekannt, dass Ultraschall in der Medizin zur Erzeugung von Kavitationsblasen eingesetzt werden kann.

Die Druckschrift WO 98/01394 offenbart eine Vorrichtung mit einem Generator zum Erzeugen von Mikroblasen. Die Mikroblasen steigen in einem Gefäß auf und durchlaufen dabei ein Ultraschallfeld. Dieses lässt Kavitationsblasen entstehen, welche die aufsteigenden Mikroblasen überlagern. Die infolgedessen entstehenden toxischen Stoffe sind geeignet, Mikroorganismen abzutöten.

Die Offenlegungsschrift DE33733583 offenbart ein Verfahren sowie eine Vorrichtung zur Erzeugung feister Luftblasen zur Flotation von Schlämmen. In diesem Dokument wird ein gasgesättigtes Wasser erst mittels einer Zahnradpumpe entspannt, und danach mit mechanischen Schwingungen beaufschlagt.

### Aufgabe

Aufgabe der Erfindung ist es, die Leistung einer Entspannungsflotationsanlage unter Reduzierung der Menge der zuzugebenden Chemikalien zu erhöhen und die Flotationsneigung der abzutrennenden Stoffe zu verbessern.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Der Erfindung liegt die Idee zu Grunde, den Sättigungsgrad - die vor dem Entspannungsventil einer Entspannungsflotationsanlage erreichte Gassättigung, anteilig bezogen auf die dort vorliegende Sättigungsgrenze - mittels mechanischer Schwingungen zu erhöhen.

Unter mechanischen Schwingungen sind allgemein periodische Bewegungen fester, flüssiger oder gasförmiger Stoffe oder Stoffbestanteile um eine Ruhelage zu verstehen. Eine mechanische Schwingung ist mithilfe sich zeitlich ändernder mechanischer Größen, wie etwa Ort, Länge, Fläche, Volumen, Dichte, Geschwindigkeit, Beschleunigung, Kraft, Druck oder Energie, beschreibbar.

Eine erfindungsgemäße Anlage zum Reinigen von Abwasser weist einen Flotationsreaktor und Mittel zum Einleiten von Abwasser in den Flotationsreaktor auf. Der Flotationsreaktor ist derart ausgebildet, dass das Abwasser in dem Flotationsreaktor mittels Druckentspannungsflotation gereinigt werden kann, sodass Klarwasser entsteht. Die Anlage weist Mittel zum Trennen des Klarwassers in einen ersten Teil und einen zweiten Teil und Mittel zur Erzeugung eines Gas-Klarwasser-Gemischs - eines Gemischs bzw. einer Dispersion aus dem zweiten Teil des Klarwassers und einem gasförmigen Stoff - durch Injektion des gasförmigen Stoffs in den zweiten Teil des Klarwassers auf. Weiterhin weist die Flotationsanlage mindestens ein Mittel zum Beaufschlagen des Gas-Klarwasser-Gemischs mit einem Druck, d. h. Mittel zur Erhöhung des in dem Gas-Klarwasser-Gemisch herrschenden Drucks, auf.

Vorzugsweise erhöht das mindestens eine Mittel zum Beaufschlagen des Gas-Klarwasser-Gemischs mit einem Druck den in dem Gas-Klarwasser-Gemisch herrschenden Druck auf einen Wert, der den Atmosphärendruck - den hydrostatischen Druck der Erdatmosphäre - zuzüglich eines in Abhängigkeit der Ausführung der Anlage möglicherweise vorhandenen hydrostatischen Drucks übersteigt.

Das mit dem Druck beaufschlagte Gas-Klarwasser-Gemisch kann einen Drucksättigungsbehälter durchströmen. Dieser ist derart ausgebildet, dass sich die Fließgeschwindigkeit bzw. die Strömungsgeschwindigkeit des mit dem Druck beaufschlagte Gas-Klarwasser-Gemischs reduziert werden kann, sodass sich mindestens ein Teil des gasförmigen Stoffs in dem zweiten Teil des Klarwassers löst. Es kann sich in dem Drucksättigungsbehälter also eine Lösung bilden, die aus dem mindestens einen Teil des gasförmigen Stoffs und dem zweiten Teil des Klarwassers besteht. Die Lösung ist zunächst mit dem Druck beaufschlagt.

Ein möglicherweise vorhandener weiterer Teil des gasförmigen Stoffs, der sich nicht in dem zweiten Teil des Klarwassers löst, sammelt sich im oberen Bereich des Drucksättigungsbehälters. Der weitere Teil des gasförmigen Stoffs kann zu den Mitteln zur Erzeugung des Gas-Klarwasser-Gemischs zurückgeführt und in den zweiten Teil des Klarwassers injiziert werden. Dies ist besonders vorteilhaft, da so der weitere Teil des gasförmigen Stoffs bereits mit dem Druck beaufschlagt ist.

Mittel zum Mindern des Drucks, mit dem die Lösung beaufschlagt ist, senken den in der Lösung herrschenden Druck, vorzugsweise auf den gleichen Druck, der in dem Abwasser herrscht, das in den Flotationsreaktor eingeleitet wurde. Hierbei handelt es sich bevorzugt um den Atmosphärendruck zuzüglich eines in Abhängigkeit der Ausführung der Anlage möglicherweise vorhandenen hydrostatischen Drucks.

Durch die Druckminderung entsteht eine übersättigte Lösung. In dieser überschreitet die Konzentration des in dem zweiten Teil des Klarwassers gelösten mindestens einen Teils des gasförmigen Stoffs dessen Löslichkeitsgrenze. Infolgedessen beginnt der mindestens eine Teil des gasförmigen Stoffs, aus dem zweiten Teil des Klarwassers auszugasen. Es bilden sich feine Gasbläschen, d. h. Blasen, die aus dem gasförmigen Stoff bestehen.

Durch Mittel zum Einleiten der übersättigten Lösung in den Flotationsreaktor gelangt die übersättigte Lösung in den Flotationsreaktor. Dort haften die Gasbläschen an dispergierten Stoffen, die in dem Abwasser enthalten sind. Die dispergierten Stoffe schwimmen infolgedessen auf.

Erfindungsgemäß umfasst die Anlage mindestens ein Mittel zum Erzeugen mechanischer Schwingungen und mindestens ein Mittel zum Einleiten der mechanischen Schwingungen in das mit dem Druck beaufschlagte Gas-Klarwasser-Gemisch, das den Drucksättigungsbehälter durchströmt. Hierdurch wird eine verbesserte Durchmischung des zweiten Teils des Klarwassers und des gasförmigen Stoffs erricht.

Durch die Injektion des gasförmigen Stoffs erzeugte Einschlüsse des gasförmigen Stoffs in dem Klarwasser werden durch die eingeleiteten mechanischen Schwingungen fragmentiert. Die Größe der Einschlüsse des gasförmigen Stoffs im Klarwasser verringert sich somit. Infolgedessen vergrößert sich die Grenzfläche zwischen dem gasförmigen Stoff und dem zweiten Teil des Klarwassers. Dies beschleunigt die Lösung des gasförmigen Stoffs in dem zweiten Teil des Klarwassers.

Bei gleichbleibendem Sättigungsdruck erhöht sich somit der Sättigungsgrad - die vor den Mitteln zum Mindern des Drucks erreichte Sättigung des gasförmigen Stoffs in dem zweiten Teil des Klarwassers bezogen auf die dort vorliegende Sättigungsgrenze. Infolgedessen vergrößert sich die Anzahl der aus der übersättigten Lösung ausgasenden Gasbläschen, während deren Größe abnimmt. Dies ermöglicht einen Betrieb der erfindungsgemäßen Anlage mit einem erhöhten Luft-/Feststoffverhältnis.

In einer bevorzugten Ausführungsform der Erfindung ist das mindestens eine Mittel zum Erzeugen der mechanischen Schwingungen mit mindestens einem Fixierelement an dem Drucksättigungsbehälter befestigt. Dabei kann sich das mindestens eine Mittel zum Erzeugen der mechanischen Schwingungen innerhalb des Drucksättigungsbehälters befinden. Bevorzugt ist das mindestens eine Mittel zum Erzeugen der mechanischen Schwingungen aber außerhalb des Drucksättigungsbehälters angebracht.

Das mindestens eine Fixierelement ist schwingungsleitend, das heißt so ausgestaltet, dass es die mechanischen Schwingungen auf den Drucksättigungsbehälter überträgt. Da ein direkter Kontakt zwischen dem Drucksättigungsbehälter und dem Gas-Klarwasser-Gemisch, das den Drucksättigungsbehälter durchströmt, besteht, werden die mechanischen Schwingungen von dem Drucksättigungsbehälter auf das Gas-Klarwasser-Gemisch übertragen. Der Drucksättigungsbehälter dient somit zusammen mit dem mindestens einen Fixierelement als Mittel zum Einleiten der mechanischen Schwingungen in das mit dem Druck beaufschlagte, den Drucksättigungsbehälter durchströmende Gas-Klarwasser-Gemisch.

Um eine Beschädigung der Anlage durch die Übertragung mechanischer Schwingungen zu vermeiden, ist der Drucksättigungsbehälter bevorzugt schwingungsentkoppelt gelagert. Das heißt, die Zuleitungen des Drucksättigungsbehälters, dessen Ableitungen, sowie die Elemente zur Fixierung des Drucksättigungsbehälters sind gegenüber den mechanischen Schwingungen nachgiebig ausgeführt.

Statt des mindestens einen Fixierelements wird in einer weiteren bevorzugten Ausführungsform der Erfindung eine Schwingungsbrücke als Mittel zum Einleiten der mechanischen Schwingungen in das mit dem Druck beaufschlagte, den Drucksättigungsbehälter durchströmende Gas-Klarwasser-Gemisch verwendet.

Dabei befindet sich ein erster Teil der Schwingungsbrücke außerhalb des Drucksättigungsbehälters. Ein zweiter Teil der Schwingungsbrücke befindet sich innerhalb des Drucksättigungsbehälters, sodass der zweite Teil der Schwingungsbrücke in direkten Kontakt mit dem Gas-Klarwasser-Gemisch, das den Drucksättigungsbehälter durchströmt, kommt. Das mindestens eine Mittel zum Erzeugen der mechanischen Schwingungen ist schwingungsleitend mit dem ersten Teil der Schwingungsbrücke gekoppelt und befindet sich vorzugsweise außerhalb des Drucksättigungsbehälters.

Somit werden die mechanischen Schwingungen von dem mindestens einen Mittel zum Erzeugen der mechanischen Schwingungen auf die Schwingungsbrücke übertragen und von der Schwingungsbrücke direkt in das Gas-Klarwasser-Gemisch, das den Drucksättigungsbehälter durchströmt, eingeleitet.

Vorzugsweise ist die Schwingungsbrücke gegenüber dem Drucksättigungsbehälter schwingungsentkoppelt gelagert. Eine direkte ungedämpfte Übertragung der mechanischen Schwingungen auf den Drucksättigungsbehälter wird hierdurch vermieden.

Die Schwingungsbrücke wird obsolet, wenn sich das mindestens eine Mittel zum Erzeugen der mechanischen Schwingungen innerhalb des Drucksättigungsbehälters befindet, wobei es in direkten Kontakt mit dem Gas-Klarwasser-Gemisch kommt, das den Drucksättigungsbehälter durchströmt. Die mechanischen Schwingungen werden somit von dem mindestens einen Mittel zum Erzeugen der mechanischen Schwingungen direkt in das Gas-Klarwasser-Gemisch eingeleitet, das den Drucksättigungsbehälter durchströmt. Dies verhindert, dass die mechanischen Schwingungen von dem Drucksättigungsbehälter oder der Schwingungsbrücke absorbiert oder gedämpft werden.

Als besonders vorteilhaft haben sich für die mechanischen Schwingungen Frequenzen im Bereich zwischen 15 und 150 Hz erwiesen. Mechanische Schwingungen dieses Frequenzbereichs sind nicht nur geeignet, die durch die Injektion des gasförmigen Stoffs erzeugten Einschlüsse des gasförmigen Stoffs in dem Klarwasser wirksam zu fragmentieren, sondern können auch einfach und kostengünstig mittels eines Schwingmotors erzeugt werden.

Daneben sind in weiteren Ausführungsformen der Erfindung andere Arten der Schwingungserzeugung möglich. So gibt es verschiedene dem Fachmann bekannte Mittel zur Erzeugung mechanischer Schwingungen in einem Bereich von 15 bis 100.000 Hz. Alternativ können Mittel zum Erzeugen mechanischer Schwingungen im Ultraschallbereich verwendet werden. Bei Ultraschallschwingungen hat sich eine Anordnung des mindestens einen Mittels zum Erzeugen der mechanischen Schwingungen innerhalb des Drucksättigungsbehälters als vorteilhaft erwiesen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Ein erfindungsgemäßes Verfahren zum Reinigen von Abwasser umfasst die Schritte Einleiten des Abwassers in einen Flotationsreaktor; Reinigen des Abwassers in dem Flotationsreaktor mittels Druckentspannungsflotation, sodass Klarwasser entsteht; Trennen des Klarwassers in einen ersten Teil und einen zweiten Teil; Erzeugen eines ein Gas-Klarwasser-Gemischs durch Injektion eines gasförmigen Stoffs in den zweiten Teil des Klarwassers; Beaufschlagen des Gas-Klarwasser-Gemischs mit einem Druck; Leiten bzw. Durchströmen des mit dem Druck beaufschlagten Gas-Klarwasser-Gemischs durch einen Drucksättigungsbehälter derart, dass sich eine Lösung - bestehend aus mindestens einem Teil des gasförmigen Stoffs und dem zweiten Teil des Klarwassers - bildet, wobei die Lösung mit dem Druck beaufschlagt ist; Mindern des Drucks, mit dem die Lösung beaufschlagt ist, sodass eine übersättigte Lösung entsteht; und Einleiten der übersättigten Lösung in den Flotationsreaktor. Erfindungsgemäß werden mechanische Schwingungen in das Gas-Klarwasser-Gemisch in dem Drucksättigungsbehälter, d. h. in das mit dem Druck beaufschlagte, den Drucksättigungsbehälter durchströmende Gas-Klarwasser-Gemisch, eingeleitet.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine Funktionsstruktur der Erfindung;
- Fig. 2: den Aufbau einer erfindungsgemäßen Anlage;
- Fig. 3A: ein erstes Ausführungsbeispiel eines Schwingungsgenerators;
- Fig. 3B: ein zweites Ausführungsbeispiel eines Schwingungsgenerators; und
- Fig. 3C: ein drittes Ausführungsbeispiel eines Schwingungsgenerators.

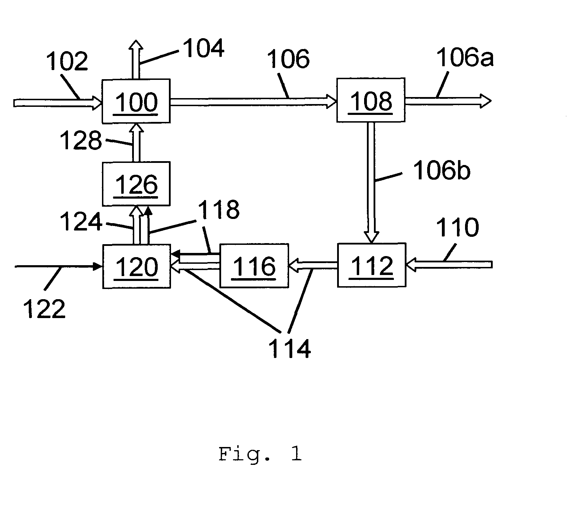

Die Funktionsstruktur in Fig. 1 gibt ein bevorzugtes erfindungsgemäßes Verfahren wieder. Durch Druckentspannungsflotation 100 wird Abwasser 102 gereinigt, wobei ein Flotat 104 ausgeschieden wird und Klarwasser 106 entsteht. Durch Trennen 108 des Klarwassers 106 resultiert ein erster Teil 106a und ein zweiter Teil 106b. Der erste Teil 106a des Klarwassers 106 wird abgeführt, etwa in die Kanalisation oder zur Nachbehandlung.

Dem zweiten Teil 106b des Klarwassers 106 wird durch Mischen 112 ein gasförmiger Stoff 110 zugefügt. Es entsteht ein Gas-Klarwasser-Gemisch 114.

Nach einer Druckerhöhung 116 ist das Gas-Klarwasser-Gemisch 114 mit einem Druck 118 beaufschlagt. Hierdurch kommt es zum Lösen 120 mindestens eines Teils des gasförmigen Stoffs 110 in dem zweiten Teil 106b des Klarwassers 106. Es entsteht eine Lösung 124. Das Lösen 120 des mindestens einen Teils des gasförmigen Stoffs 110 wird durch die Einleitung mechanischer Schwingungen 122 beschleunigt.

Die Lösung 124 ist solange mit dem Druck 118 beaufschlagt, bis eine Druckminderung 126 stattfindet. Es entsteht eine übersättigte Lösung 128, aus welcher der mindestens eine Teil des gasförmigen Stoffs 110 in Form zahlreicher kleiner Blasen ausperlt. Die übersättigte Lösung 128 dient der Druckentspannungsflotation 100.

In einer weiteren, nicht abgebildeten Funktionsstruktur der Erfindung werden die Funktionen Mischen 112 und Druckerhöhung 116 in umgekehrter Reihenfolge ausgeführt. Dabei wird durch die Druckerhöhung 116 der zweite Teil 106b des Klarwassers 106 mit dem Druck 118 beaufschlagt. Das Mischen 112 erfolgt durch Zugabe des gasförmigen Stoffs 110 zu dem mit dem Druck 118 beaufschlagten zweiten Teil 106b des Klarwassers 106.

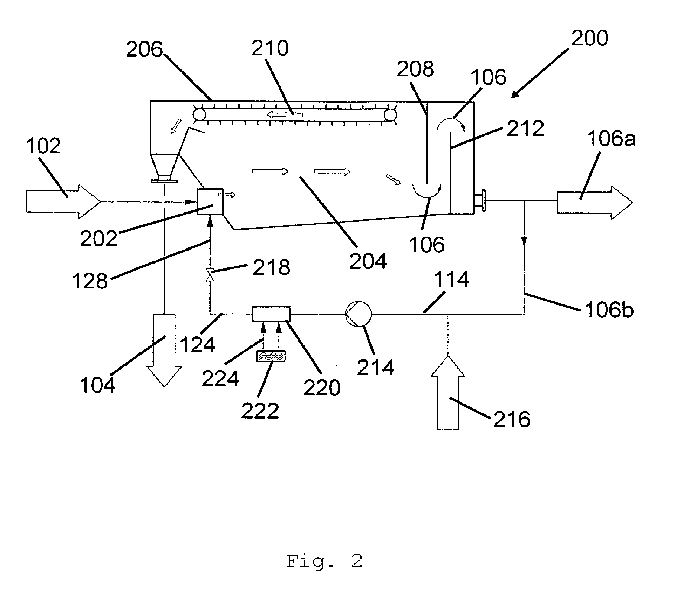

Bei der in Fig. 2 dargestellten Entspannungsflotationsanlage 200 handelt es sich um ein bevorzugtes Ausführungsbeispiel der Erfindung. Diese Entspannungsflotationsanlage 200 implementiert die in Fig. 1 dargestellte Funktionsstruktur.

Das Abwasser 102 wird hier in einer Mischkammer 202 mit der übersättigten Lösung 128 vermengt. Aus der Mischkammer 202 gelangt das mit der übersättigten Lösung 128 vermengte Abwasser 102 in eine Flotationszone 204 eines Flotationsreaktors 206.

Aus der übersättigten Lösung 128 ausperlende Luftblasen haften in der Flotationszone 204 an Feststoffteilchen und/oder Flocken an, die in dem Abwasser 102 enthalten sind. Infolgedessen schwimmen die Feststoffteilchen und/oder Flocken als Flotat 104 auf.

Eine Barriere 208 hält aufschwimmendes Flotat 104 zurück, so dass es von dem Klarwasser 106 getrennt werden kann. Das Klarwasser 106 wird hierzu unter der Barriere 208 hindurchgeleitet. Es fließt über einen Überlauf 212 aus dem Flotationsreaktor 206. Das aufschwimmende Flotat 104 wird mittels eines mechanischen Räumers 210 aus dem Flotationsreaktor 206 entfernt.

Eine Pumpe 214 beaufschlagt den zweiten Teil 106b des Klarwassers 106 mit dem Druck 118. Vor dem Eintritt in die Pumpe 214 wird dem zweiten Teil 106b des Klarwassers 106 Luft 216 beigemengt. Hierzu eignet sich beispielsweise ein Venturi-Rohr. Es entsteht das Gas-Klarwasser-Gemisch 114.

Als Pumpe 214 kommt vorzugsweise eine mehrstufige Kreiselpumpe zum Einsatz. Die Pumpe 214 durchwirbelt das Gas-Klarwasser-Gemisch 114 und verkleinert die in dem Gas-Klarwasser-Gemisch 114 enthaltenen Einschlüsse der beigemengten Luft 216. Neben dem Venturi-Rohr ist somit die Pumpe 214 Träger der Funktion Mischen 112.

Darüber hinaus bewirkt die Pumpe 214 die Druckerhöhung 116. Das mit dem Druck 118 beaufschlagte Gas-Klarwasser-Gemisch 114 gelangt, nachdem es die Pumpe 214 passiert hat, in den Drucksättigungsbehälter 220. Während das mit dem Druck 118 beaufschlagte Gas-Klarwasser-Gemisch 114 in dem Drucksättigungsbehälter 220 verweilt, findet das Lösen 120 der Luft 216 statt. Dabei ist die Verweilzeit des mit dem Druck 118 beaufschlagten Gas-Klarwasser-Gemischs 114 in dem Drucksättigungsbehälter 220 von dem Volumen des Drucksättigungsbehälters 220 abhängig.

Luft 216, die nicht in dem Gas-Klarwasser-Gemisch 114 gelöst werden kann, sammelt sich im oberen Bereich des Drucksättigungsbehälters 220. Der Drucksättigungsbehälter 220 enthält also neben dem den Drucksättigungsbehälter 220 durchströmenden Gas-Klarwasser-Gemisch 114 auch Luft 216. Da die Grenzfläche zwischen der in dem Drucksättigungsbehälter 220 enthaltenen Luft 216 und dem in dem Drucksättigungsbehälter 220 enthaltenen Gas-Klarwasser-Gemisch 114 im Verhältnis zum Volumen der in dem Drucksättigungsbehälter 220 enthaltenen Luft 216 vergleichsweise klein ist, wird nur ein geringer Teil dieser Luft 216 in dem Gas-Klarwasser-Gemisch 114 gelöst. Eine Zunahme der Menge der in dem Drucksättigungsbehälter 220 enthaltenen Luft 216 würde aber die Funktionsfähigkeit der Entspannungsflotationsanlage 200 gefährden.

Daher wird die in dem Drucksättigungsbehälter 220 enthaltene Luft 216 zurückgeführt und in den zweiten Teil 106b des Klarwassers 106 injiziert. Dies verbessert zudem das Mischen 112 der Luft 216 mit dem zweiten Teil 106b des Klarwassers 106, da die in dem Drucksättigungsbehälter 220 enthaltene Luft 216 mit dem Druck 118 beaufschlagt ist.

Ein Schwingungsgenerator 222 erzeugt die mechanischen Schwingungen 122. Schwingungsleiter 224 leiten diese in das Gas-Klarwasser-Gemisch 114 ein, das den Drucksättigungsbehälter 220 durchströmt.

Durch das in Folge der Druckerhöhung 116 in dem Drucksättigungsbehälter 220 stattfindende Lösen 120 mindestens eines Teils der Luft 216 entsteht die Lösung 124. Diese ist mit dem Druck 118 beaufschlagt, bis sie durch das Entspannungsventil 218 gelangt. Hier findet die Druckminderung 126 statt. Die infolgedessen entstehende übersättigte Lösung 128 wird in die Mischkammer 202 eingeleitet.

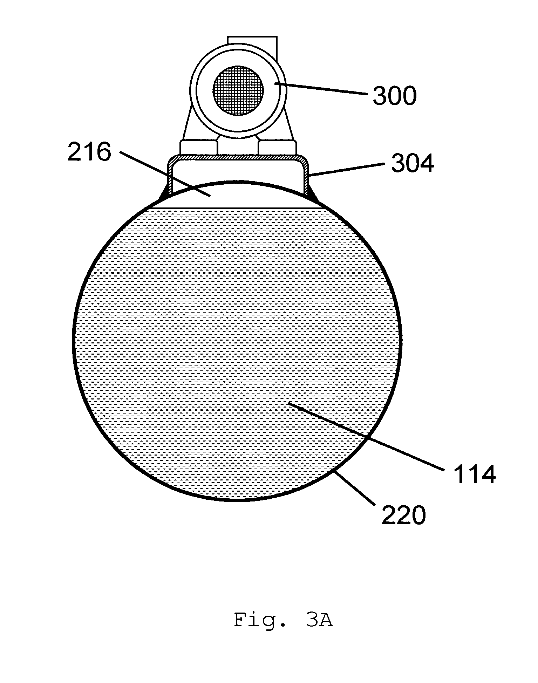

Die Realisierung des Schwingungsgenerators 222 und der Schwingungsleiter 224 erfolgt vorzugsweise wie in Fig. 3A dargestellt. Als Schwingungsgenerator 222 dient hier ein Unwuchtmotor 300, auch Schwingmotor oder Vibrationsmotor genannt.

Ein U-Profil 304 wird als Fixierelement verwendet. Der Unwuchtmotor 300 ist mit dem U-Profil 304 verschraubt. Dieses ist wiederum mit dem Drucksättigungsbehälter 220 verscheißt. Das U-Profil 304 überträgt somit die durch den Unwuchtmotor 300 erzeugten mechanischen Schwingungen 122 auf den Drucksättigungsbehälter 220. Der Drucksättigungsbehälter 220 wiederum leitet die mechanischen Schwingungen 122 in das Gas-Klarwasser-Gemisch 114 ein, das den Drucksättigungsbehälter 220 durchströmt.

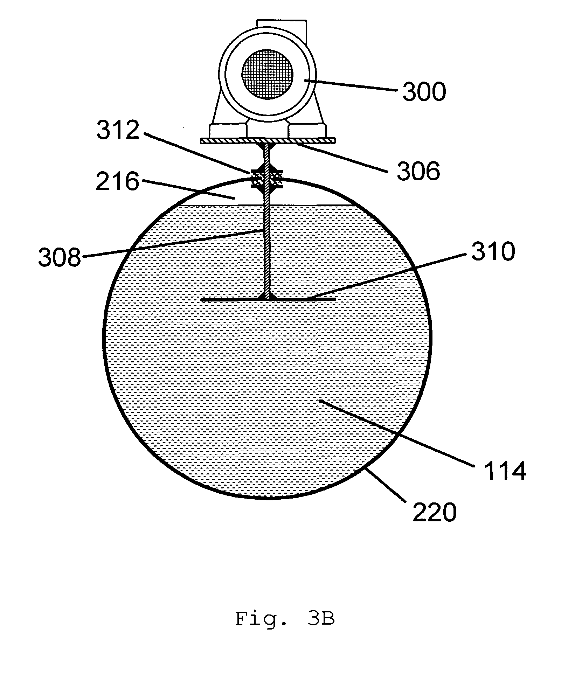

Wie in Fig. 3B dargestellt, können die mechanischen Schwingungen 122 alternativ mittels einer Schwingungsbrücke übertragen und in das den Drucksättigungsbehälter 220 durchströmende Gas-Klarwasser-Gemisch 114 eingeleitet werden. Die Schwingungsbrücke wird gebildet durch eine Trägerplatte 306, ein stabförmiges Element 308 und eine Schwingplatte 310.

Der Unwuchtmotor 300 ist mit der Trägerplatte 306 verschraubt. Das stabförmige Element 308 verbindet die Trägerplatte 306 schwingungsleitend mit der Schwingplatte 310. Infolgedessen werden die durch den Unwuchtmotor 300 erzeugten mechanischen Schwingungen 122 auf die Schwingplatte 310 übertragen und von dieser in das den Drucksättigungsbehälter 220 durchströmende Gas-Klarwasser-Gemisch 114 eingeleitet. Dazu muss die Schwingplatte 310 so innerhalb des Drucksättigungsbehälters 220 angeordnet sein, dass sie in das den Drucksättigungsbehälter 220 durchströmende Gas-Klarwasser-Gemisch 114 eintaucht.

Um eine direkte Übertragung der mechanischen Schwingungen 122 von Schwingungsbrücke auf den Drucksättigungsbehälter 220 zu verhindern, ist die Schwingungsbrücke nicht schwingungsleitend gelagert. In dem in Fig. 3B dargestellten Ausführungsbeispiel ist das stabförmige Element 308 dementsprechend mittels einer schwingungsabsorbierenden Lagerung 312 an dem Drucksättigungsbehälter 220 angebracht. Damit das den Drucksättigungsbehälter 220 durchströmende Gas-Klarwasser-Gemisch 114 und die in dem Drucksättigungsbehälter 220 enthaltende Luft 216 nicht entweichen können, ist die Lagerung 312 darüber hinaus gasundurchlässig.

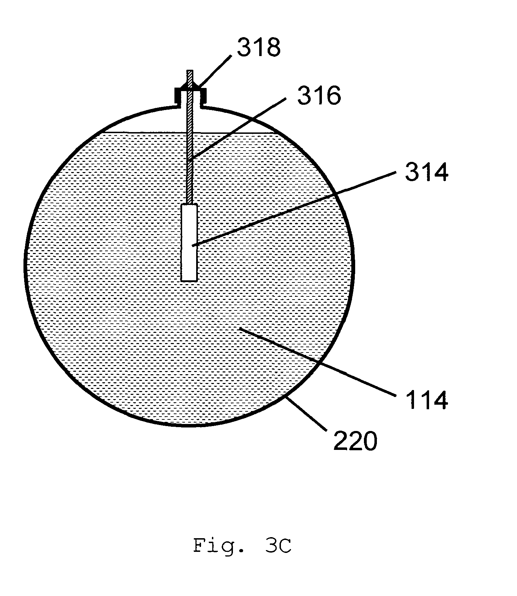

Im Folgenden wird auf Fig. 3C Bezug genommen. Statt des Unwuchtmotors 300 kann ein Ultraschallwandler bzw. eine Ultraschallquelle 314 als Mittel zum Erzeugen der mechanischen Schwingungen 122 verwendet werden. Um dabei eine zu starke Dämpfung der mechanischen Schwingungen 122 zu vermeiden, ist der Ultraschallwandler 314 vorzugsweise im Inneren des Drucksättigungsbehälters 220 angeordnet, sodass er in Kontakt mit dem den Drucksättigungsbehälter 220 durchströmenden Gas-Klarwasser-Gemisch 114 kommt. Eine schwingungsabsorbierende Aufhängung 316 hält den Ultraschallwandler 314. Die Aufhängung 316 ist mittels einer Kappe 318 an dem Drucksättigungsbehälter 220 befestigt. Diese verschließt darüber hinaus eine Öffnung zum Einführen des Ultraschallwandlers 314 in den Drucksättigungsbehälter 220 gasdicht.

### Bezugszeichen

- 100: Druckentspannungsflotation
- 102: Abwasser
- 104: Flotat
- 106: Klarwasser
- 106a: erster Teil des Klarwassers
- 106b: zweiter Teil des Klarwassers
- 108: Trennen
- 110: gasförmiger Stoff
- 112: Mischen
- 114: Gas-Klarwasser-Gemisch
- 116: Druckerhöhung
- 118: Druck
- 120: Lösen
- 122: mechanische Schwingungen
- 124: Lösung
- 126: Druckminderung
- 128: übersättigte Lösung
- 200: Entspannungsflotationsanlage
- 202: Mischkammer
- 204: Flotationszone
- 206: Flotationsreaktor
- 208: Barriere
- 210: Räumer
- 212: Überlauf
- 214: Pumpe
- 216: Luft
- 218: Entspannungsventil
- 220: Drucksättigungsbehälter
- 222: Schwingungsgenerator
- 224: Schwingungsleiter
- 300: Unwuchtmotor
- 304: U-Profil
- 306: Trägerplatte
- 308: stabförmiges Element
- 310: Schwingplatte
- 312: Lagerung
- 314: Ultraschallwandler
- 316: Aufhängung
- 318: Kappe

### zitierte Literatur

### zitierte Patentliteratur

WO 2005/074365 A2
WO 98/01394
US 5,219,401
US 6,413,216
US 5,827,204
DE 37 33 583

### zitierte Nicht-Patentliteratur

VDMA-Einheitsblatt: VDMA 24430. Verband Deutscher Maschinen- und Anlagenbau e.V., Frankfurt/Main; März 2010.

## Patentansprüche

1. Anlage (200) zum Reinigen von Abwasser (102)
a) mit einem Flotationsreaktor (206);
b) mit Mitteln zum Einleiten des Abwassers (102) in den Flotationsreaktor (206), wobei der Flotationsreaktor (206) derart ausgebildet ist, dass das Abwasser (102) in dem Flotationsreaktor (206) mittels Druckentspannungsflotation (100) gereinigt werden kann, sodass Klarwasser (106) entsteht;
c) mit Mitteln zum Trennen (108) des Klarwassers (106) in einen ersten Teil (106a) und einen zweiten Teil (106b);
d) mit Mitteln zur Erzeugung eines Gas-Klarwasser-Gemischs (114) durch Injektion (112) eines gasförmigen Stoffs (110, 216) in den zweiten Teil des Klarwassers (106b);
e) mit mindestens einem Mittel (214) zum Beaufschlagen des Gas-Klarwasser-Gemischs (114) mit einem Druck (118);
f) mit einem Drucksättigungsbehälter (220), den das mit dem Druck (118) beaufschlagte Gas-Klarwasser-Gemisch (114) durchströmen kann, wobei der Drucksättigungsbehälter (220) derart ausgebildet ist, dass sich in ihm eine Lösung (124) - bestehend aus mindestens einem Teil des gasförmigen Stoffs (110, 216) und dem zweiten Teil (106b) des Klarwassers (106) - bilden kann, wobei die Lösung (124) mit dem Druck (118) beaufschlagt ist;
g) mit Mitteln (218) zum Mindern des Drucks (118), mit dem die Lösung (124) beaufschlagt ist, sodass eine übersättigte Lösung (128) entsteht; und
h) mit Mitteln zum Einleiten der übersättigten Lösung (128) in den Flotationsreaktor (206);
**gekennzeichnet durch**
i) mindestens ein Mittel (222, 300, 314) zum Erzeugen mechanischer Schwingungen (122); und **durch**
j) mindestens ein Mittel (220, 224, 304, 306, 308, 310, 314) zum Einleiten der mechanischen Schwingungen (122) in das mit dem Druck (118) beaufschlagte, den Drucksättigungsbehälter (220) durchströmende Gas-Klarwasser-Gemisch (114).

2. Anlage (200) nach Anspruch 1,
**dadurch gekennzeichnet,**
**dass** das mindestens eine Mittel (222, 300, 314) zum Erzeugen der mechanischen Schwingungen (122) mit mindestens einem Fixierelement (304) an dem Drucksättigungsbehälter (220) befestigt ist, wobei das mindestens eine Fixierelement (304) die mechanischen Schwingungen (122) auf den Drucksättigungsbehälter (220) überträgt.

3. Anlage (200) nach Anspruch 1,
**gekennzeichnet durch**
a) eine Schwingungsbrücke (306, 308, 310);
b) wobei ein erster Teil der Schwingungsbrücke (306, 308, 310) sich außerhalb des Drucksättigungsbehälters (220) befindet;
c) wobei ein zweiter Teil der Schwingungsbrücke (306, 308, 310) sich innerhalb des Drucksättigungsbehälters (220) befindet; und
d) wobei das mindestens eine Mittel (222, 300, 314) zum Erzeugen der mechanischen Schwingungen (122) schwingungsleitend mit dem ersten Teil der Schwingungsbrücke (306, 308, 310) gekoppelt ist.

4. Anlage (200) nach Anspruch 1 oder 2,
**dadurch gekennzeichnet,**
**dass** das mindestens eine Mittel (222, 300, 314) zum Erzeugen der mechanischen Schwingungen (122) sich innerhalb des Drucksättigungsbehälters (220) befindet.

5. Anlage (200) nach einem der vorhergehenden Ansprüche,
**dadurch gekennzeichnet,**
**dass** die Frequenz der mechanischen Schwingungen (122) im Bereich zwischen 15 Hz und 150 Hz liegt.

6. Verfahren zum Reinigen von Abwasser (102) mit folgenden Schritten:
a) Einleiten des Abwassers (102) in einen Flotationsreaktor (206);
b) Reinigen des Abwassers (102) in dem Flotationsreaktor (206) mittels Druckentspannungsflotation (100), sodass Klarwasser (106) entsteht;
c) Trennen (108) des Klarwassers (106) in einen ersten Teil (106a) und einen zweiten Teil (106b);
d) Erzeugen eines ein Gas-Klarwasser-Gemischs (114) durch Injektion (112) eines gasförmigen Stoffs (110, 216) in den zweiten Teil (106b) des Klarwassers (106);
e) Beaufschlagen des Gas-Klarwasser-Gemischs (114) mit einem Druck (118);
f) Leiten des mit dem Druck (118) beaufschlagten Gas-Klarwasser-Gemischs (114) durch einen Drucksättigungsbehälter (220) derart, dass sich eine Lösung (124) - bestehend aus mindestens einem Teil des gasförmigen Stoffs (110, 216) und dem zweiten Teil (106b) des Klarwassers (106) - bildet, wobei die Lösung (124) mit dem Druck (118) beaufschlagt ist;
g) Mindern des Drucks (118), mit dem die Lösung (124) beaufschlagt ist, sodass eine übersättigte Lösung (128) entsteht; und
h) Einleiten der übersättigten Lösung (128) in den Flotationsreaktor (206);
**dadurch gekennzeichnet,**
i) **dass** mechanische Schwingungen (122) in das Gas-Klarwasser-Gemisch (114) in dem Drucksättigungsbehälter (220) eingeleitet werden.

## Claims

1. Plant (200) for purifying waste water (102), comprising
a) a flotation reactor (206);
b) means for introducing the waste water (102) into the flotation reactor (206), wherein the flotation reactor (206) is configured such that the waste water (102) may be purified by pressure relief flotation (100) in the flotation reactor (206), so that clarified water (106) is produced;
c) means for separating (108) the clarified water (106) in a first part (106a) and a second part (106b);
d) means for creating a mixture (114) of gas and clarified water by injecting (112) a gaseous substance (110, 216) into the second part of the clarified water (106b);
e) at least one means (214) for applying a pressure (118) to the mixture (114) of gas and clarified water;
f) a pressure-saturation vessel (220), through which the mixture (114) of gas and clarified water, to which the pressure (118) has been applied, can flow, wherein the pressure-saturation vessel (220) is configured such that a solution (124) - comprising at least a part of the gaseous substance (110, 216) and the second part (106b) of the clarified water (106) - can form within, wherein the pressure (118) is applied to the solution (124);
g) means (218) for reducing the pressure (118) applied to the solution (124), so that a supersaturated solution (128) forms; and
h) means for introducing the supersaturated solution (128) into the flotation reactor (206);
**characterized**
i) **by** at least one means (222, 300, 314) for creating mechanical oscillations (122); and by
j) at least one means (220, 224, 304, 306, 308, 310, 314) for introducing the mechanical oscillations (122) into the mixture (114) of gas and clarified water flowing through the pressure-saturation vessel (220), to which the pressure (118) has been applied.

2. Plant (200) according to claim 1,
**characterized**
**in that** the at least one means (222, 300, 314) for creating the mechanical oscillations (122) is attached to the pressure-saturation vessel (220) by at least one fixing element (304), wherein the at least one fixing element (304) transmits the mechanical oscillations (122) to the pressure-saturation vessel (220).

3. Plant (200) according to claim 1,
**characterized by**
a) a vibrational bridge (306, 308, 310);
b) wherein a first part of the vibrational bridge (306, 308, 310) is located outside the pressure-saturation vessel (220);
c) wherein a second part of the vibrational bridge (306, 308, 310) is located within the pressure-saturation vessel (220); and
d) wherein the at least one means (222, 300, 314) for creating the mechanical oscillations (122) is coupled to the first part of the vibrational bridge (306, 308, 310) in a vibration-conductive manner.

4. Plant (200) according to claim 1 or 2,
**characterized**
**in that** the at least one means (222, 300, 314) for creating the mechanical oscillations (122) is located inside the pressure-saturation vessel (220).

5. Plant (200) according to one of the preceding claims,
**characterized**
**in that** the frequency of the mechanical oscillations (122) lies in the region between 15 Hz and 150 Hz.

6. Method for purifying waste water (102), comprising the following steps:
a) introducing the waste water (102) into a flotation reactor (206);
b) purifying the waste water (102) in the flotation reactor (206) by pressure relief flotation (100), so that clarified water (106) is produced;
c) separating (108) the clarified water (106) in a first part (106a) and a second part (106b);
d) creating a mixture (114) of gas and clarified water by injecting (112) a gaseous substance (110, 216) into the second part (106b) of the clarified water (106);
e) applying a pressure (118) to the mixture (114) of gas and clarified water;
f) conducting the mixture (114) of gas and clarified water, to which the pressure (118) has been applied, through a pressure-saturation vessel (220) such that a solution (124) - comprising at least a part of the gaseous substance (110, 216) and the second part (106b) of the clarified water (106) - forms, wherein the pressure (118) is applied to the solution (124);
g) reducing the pressure (118) applied to the solution (124), so that a supersaturated solution (128) forms; and
h) introducing the supersaturated solution (128) into the flotation reactor (206);
**characterized in that**
i) mechanical oscillations (122) are introduced into the mixture (114) of gas and clarified water in the pressure-saturation vessel (220).

## Revendications

1. Installation (200) d'épuration d'eaux usées (102), comprenant :
a) un réacteur de flottation (206) ;
b) des moyens permettant d'introduire les eaux usées (102) dans le réacteur de flottation (206), dans laquelle le réacteur de flottation (206) est conformé de sorte que les eaux usées (102) puissent être épurées dans le réacteur de flottation (206) par flottation sous détente de pression (100) afin d'obtenir de l'eau claire (106) ;
c) des moyens (108) de séparation de l'eau claire (106) en une première partie (106a) et une seconde partie (106b) ;
d) des moyens de production d'un mélange de gaz et d'eau claire (114) par injection (112) d'une substance gazeuse (110, 216) dans la seconde partie de l'eau claire (106b) ;
e) au moins un moyen (214) pour soumettre le mélange de gaz et d'eau claire (114) à une pression (118) ;
f) une cuve à saturation de pression (220), qui peut être parcourue par le mélange de gaz et d'eau claire (114) soumis à la pression (118), dans laquelle la cuve à saturation de pression (220) est conformée de manière qu'il puisse se former dans celle-ci une solution (124) - constituée d'au moins une partie de la substance gazeuse (110, 216) et de la seconde partie (106b) de l'eau claire (106) -, la solution (124) étant soumise à la pression (118) ;
g) des moyens (218) pour réduire la pression (118) à laquelle la solution (124) est soumise de manière à obtenir une solution sursaturée (128) ; et
h) des moyens pour introduire la solution sursaturée (128) dans le réacteur de flottation (206) ;
**caractérisée par** :
i) au moins un moyen (222, 300, 314) pour produire des vibrations mécaniques (122) ; et
j) au moins un moyen (220, 224, 304, 306, 308, 310, 314) pour appliquer les vibrations mécaniques (122) dans le mélange de gaz et d'eau claire (114) soumis à la pression (118) et parcourant la cuve à saturation de pression (220).

2. Installation (200) selon la revendication 1, **caractérisée en ce que** :
le au moins un moyen (222, 300, 314) pour produire les vibrations mécaniques (122) est fixé par au moins un élément de fixation (304) sur la cuve à saturation de pression (220), dans laquelle le au moins un élément de fixation (304) transfère les vibrations mécaniques (122) au récipient à saturation de pression (220).

3. Installation (200) selon la revendication 1, **caractérisée par** :
a) un pont de vibrations (306, 308, 310) ;
b) dans laquelle une première partie du pont de vibrations (306, 308, 310) se trouve à l'extérieur de la cuve à saturation de pression (220) ;
c) dans laquelle une seconde partie du pont de vibrations (306, 308, 310) se trouve à l'intérieur de la cuve à saturation de pression (220) ; et
d) dans laquelle le au moins un moyen (222, 300, 314) pour la production des vibrations mécaniques (122) est couplé à la première partie du pont de vibrations (306, 308, 310) de manière à conduire des vibrations.

4. Installation (200) selon la revendication 1 ou la revendication 2,
**caractérisée en ce que** :
le au moins un moyen (222, 300, 314) pour la production des vibrations mécaniques (122) se trouve à l'intérieur de la cuve à saturation de pression (220).

5. Installation (200) selon l'une quelconque des revendications précédentes,
**caractérisée en ce que** :
la fréquence des vibrations mécaniques (122) se situe dans la plage comprise entre 15 Hz et 150 Hz.

6. Procédé d'épuration d'eaux usées (102) présentant les étapes suivantes consistant à :
a) introduire les eaux usées (102) dans un réacteur de flottation (206) ;
b) épurer les eaux usées (102) dans le réacteur de flottation (206) par flottation sous détente de pression (100) de manière à obtenir de l'eau claire (106) ;
c) séparer (108) l'eau claire (106) en une première partie (106a) et une seconde partie (106b) ;
d) produire un mélange de gaz et d'eau claire (114) par injection (112) d'une substance gazeuse (110, 216) dans la seconde partie (106b) de l'eau claire (106) ;
e) soumettre le mélange de gaz et d'eau claire (114) à une pression (118) ;
f) acheminer le mélange de gaz et d'eau claire (114) soumis à la pression (118) à travers une cuve à saturation de pression (220) de sorte que se forme une solution (124) - constituée d'au moins une partie de la substance gazeuse (110, 216) et de la seconde partie (106b) de l'eau claire (106) -, dans lequel la solution (124) est soumise à la pression (118) ;
g) réduire la pression (118), à laquelle la solution (124) est soumise, de manière à obtenir une solution sursaturée (128) ; et
h) introduire la solution sursaturée (128) dans le réacteur de flottation (206) ;
**caractérisé en ce que** :
i) des vibrations mécaniques (122) sont appliquées au mélange de gaz et d'eau claire (114) dans la cuve à saturation de pression (220).
